# EUROPEAN PATENT APPLICATION

(11) **EP 2 818 760 A1**
(43) Date of publication of application: **31.12.2014**
(21) Application number: 12869468.4
(22) Date of filing: 24.02.2012
(51) Int. Cl.: F16H 15/52

(54) **CONTINUOUSLY VARIABLE TRANSMISSION**

(71) Applicant: Toyota Jidosha Kabushiki Kaisha, Toyota-shi, Aichi 471-8571 (JP)
(72) Inventor: ARATSU, Yuki, Toyota-shi Aichi 471-8571 (JP); MURAKAMI, Akira, Toyota-shi Aichi 471-8571 (JP); OGAWA, Hiroyuki, Toyota-shi Aichi 471-8571 (JP); HIBINO, Akira, Toyota-shi Aichi 471-8571 (JP)
(74) Representative: Intès, Didier Gérard André
(86) International application number: PCT/JP2012/054641
(87) International publication number: WO 2013/125041

(57) **Abstract**

A continuously variable transmission (1) includes a first rotating element (10), a second rotating element (20), a rolling member (50), a support shaft (51), and a support rotating element (40). The support rotating element (40) includes a fixed element (41) provided with a first guide portion (44) guiding a first guide end portion (52), and a movable element (42) provided with a second guide portion (45) guiding a second guide end portion (53). The support shaft (51) is configured such that: either one of a moving distance of the first guide end portion (52) and a moving distance of the second guide end portion (53) at the time when the support shaft (51) is tilted together with the rolling member (50) is relatively large, and the other one of the moving distances is relatively small; and an outside diameter of that one of the first guide end portion (52) and the second guide end portion (53) which has a relatively large moving distance is relatively larger than an outside diameter of the other one which has a relatively small moving distance. This yields such an effect that the continuously variable transmission (1) is able to realize a smooth change gear operation.

## Description

### TECHNICAL FIELD

The present invention relates to a continuously variable transmission.

### BACKGROUND ART

As a conventional, so-called traction drive mode transmission, Patent Document 1, for example, describes a continuously variable transmission configured to include a transmission shaft serving as a rotation center, a plurality of rotating elements that are relatively rotatable with a central axis of the transmission shaft being taken as a first rotation central axis, and a plurality of planetary balls, as rolling members, disposed radially around the first rotation central axis. The continuously variable transmission is configured to include, as the plurality of rotating elements, input and output rings that sandwich the planetary balls therebetween, a carrier that supports the planetary balls in a tilting manner, a sun roller having an outer peripheral surface making contact with the planetary balls, and the like, and changes a transmission gear ratio continuously by tilting the planetary balls. In the continuously variable transmission, guide end portions are provided on respective ends of a support shaft (a spindle) of the planetary ball. The guide end portions of the support shaft are guided while a fixed carrier and a movable carrier rotate relative to each other, so that the planetary ball is tilted together with the support shaft, thereby changing the transmission gear ratio.

### CITATION LIST

### PATENT DOCUMENT(S)

Patent Document 1: U.S. Patent Application Publication No. 2010/0267510

### SUMMARY OF THE INVENTION

### Problem to be Solved by the Invention

In the meantime, the above continuously variable transmission described in Patent Document 1 has room for further improvement in terms of a change gear operation associated with a tilting operation of the planetary balls.

The present invention is accomplished in view of the above circumstance, and an object of the present invention is to provide a continuously variable transmission that is able to realize a smooth change gear operation.

### Means for Solving the Problem

In order to achieve the above object, a continuously variable transmission according to the present invention is characterized by including: a transmission shaft serving as a rotation center; a first rotating element and a second rotating element disposed opposed to each other in an axial direction of the transmission shaft so as to be rotatable relative to each other around a common first rotation central axis as a rotation center; a rolling member rotatable around, as a rotation center, a second rotation central axis that is different from the first rotation central axis, the rolling member being sandwiched between the first rotating element and the second rotating element so that a torque is transmittable between the first rotating element and the second rotating element; a support shaft that supports the rolling member such that the second rotation central axis serves as a rotation center and respective end portions thereof project from the rolling member; and a support rotating element including a fixed element disposed on the transmission shaft so as to be rotatable relative to the first rotating element and the second rotating element around the first rotation central axis as a rotation center and provided on one end-portion side of the support shaft so as not to be rotatable relative to the transmission shaft, and a movable element disposed on the other-end-portion side of the support shaft so as to be opposed to the fixed element and provided so as to be rotatable relative to the transmission shaft, the support rotating element supporting the support shaft, wherein: the support rotating element holds the support shaft by a first guide portion and a second guide portion in a state where a tilting operation of the rolling member is performable, the first guide portion being provided in the fixed element so as to extend in a direction perpendicular to the first rotation central axis and formed so as to be opened toward the rolling member in such a manner that a first guide end portion, which is one end portion of the support shaft, is inserted therein so that a movement of the first guide end portion is guidable, and the second guide portion being provided in the movable element so as to extend in a direction inclined with respect to the direction perpendicular to the first rotation central axis and formed so as to be opened toward the rolling member in such a manner that a second guide end portion, which is the other end portion of the support shaft, is inserted therein so that a movement of the second guide end portion is guidable, and the support rotating element is able to change a transmission gear ratio, which is a rotation speed ratio between the respective rotating elements, by tilting the rolling member together with the support shaft by a relative displacement between the first guide portion and the second guide portion in association with a relative rotation between the fixed element and the movable element; the support shaft is configured such that either one of a moving distance of the first guide end portion and a moving distance of the second guide end portion at the time when the support shaft is tilted together with the rolling member is relatively large, and the other one of the moving distances is relatively small; and an outside diameter of that one of the first guide end portion and the second guide end portion which has a relatively large moving distance is relatively larger than an outside diameter of the other one which has a relatively small moving distance.

Further, the continuously variable transmission can be configured such that a ratio between the outside diameter of the first guide end portion and the outside diameter of the second guide end portion is equivalent to a ratio between the moving distance of said first guide end portion and the moving distance of said second above guide end portion at the time when the support shaft is tilted together with the rolling member.

Further, the continuously variable transmission can be configured such that the moving distance of the first guide end portion at the time when the support shaft is tilted together with the rolling member is determined based on a distance from a contact point of the first guide end portion with the first guide portion to a rolling center of the rolling member, and the moving distance of the second guide end portion at the time when the support shaft is tilted together with the rolling member is determined based on a distance from a contact point of the second guide end portion with the second guide portion to the rolling center of the rolling member.

Further, the continuously variable transmission can be configured such that the ratio between the outside diameter of the first guide end portion and the outside diameter of the second guide end portion is equivalent to a ratio between the distance from the contact point of the first guide end portion with the first guide portion to the rolling center of the rolling member, and the distance from the contact point of the second guide end portion with the second guide portion to the rolling center of the rolling member.

Further, the continuously variable transmission can be configured such that at least either one of the first guide end portion and the second guide end portion is formed separately from an intermediate portion of the support shaft between the first guide end portion and the second guide end portion, so as to be assembled to the intermediate portion.

Further, the continuously variable transmission can be configured such that at least either one of the first guide end portion and the second guide end portion is configured to include a roller to be relatively rotatably assembled to the intermediate portion of the support shaft between the first guide end portion and the second guide end portion.

Further, the continuously variable transmission can be configured such that the support shaft is provided so as to be rotatable integrally with the rolling member; the first guide end portion is configured to include a first bearing provided between the first guide end portion and the first guide portion; and the second guide end portion is configured to include a second bearing provided between the second guide end portion and the second guide portion.

### Effects of the Invention

The continuously variable transmission according to the present invention yields such an effect that a smooth change gear operation is realized.

### BRIEF DESCRIPTION OF THE DRAWINGS

[FIG. 1] FIG. 1 is a schematic sectional view of a continuously variable transmission according to Embodiment 1.
[FIG. 2] FIG. 2 is a partial sectional view of the continuously variable transmission according to Embodiment 1.
[FIG. 3] FIG. 3 is a plane view to describe a fixed carrier of the continuously variable transmission according to Embodiment 1.
[FIG. 4] FIG. 4 is a plane view to describe a movable carrier of the continuously variable transmission according to Embodiment 1.
[FIG. 5] FIG. 5 is a plane view to describe a plate of the continuously variable transmission according to Embodiment 1.
[FIG. 6] FIG. 6 is a configuration diagram illustrating a configuration of a support shaft of the continuously variable transmission according to Embodiment 1.
[FIG. 7] FIG. 7 is a partial sectional view of a continuously variable transmission according to Embodiment 2.
[FIG. 8] FIG. 8 is a configuration diagram illustrating a configuration of a support shaft of a continuously variable transmission according to a modified embodiment.
[FIG. 9] FIG. 9 is a configuration diagram illustrating a configuration of a support shaft of a continuously variable transmission according to a modified embodiment.
[FIG. 10] FIG. 10 is a configuration diagram illustrating a configuration of a support shaft of a continuously variable transmission according to a modified embodiment.

### MODES FOR CARRYING OUT THE INVENTION

Embodiments of the present invention will hereinafter be described in detail with reference to the drawings. Note that these embodiments are not intended to limit this invention. Further, constituents in the following embodiments include constituents that are easily replaceable by a person skilled in the art or constituents that are substantially the same as those in the following embodiments.

### [Embodiment 1]

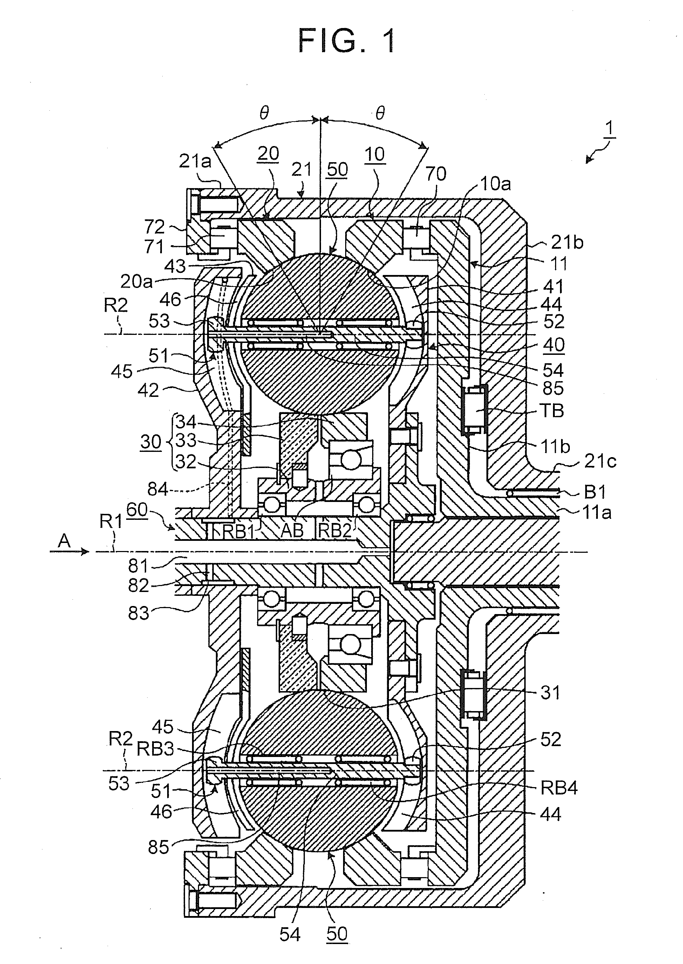

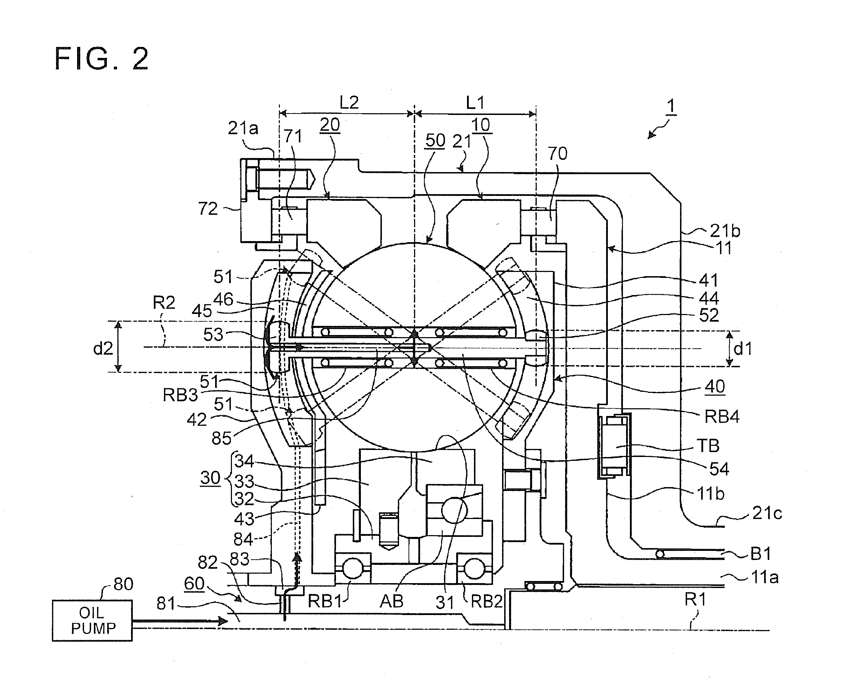

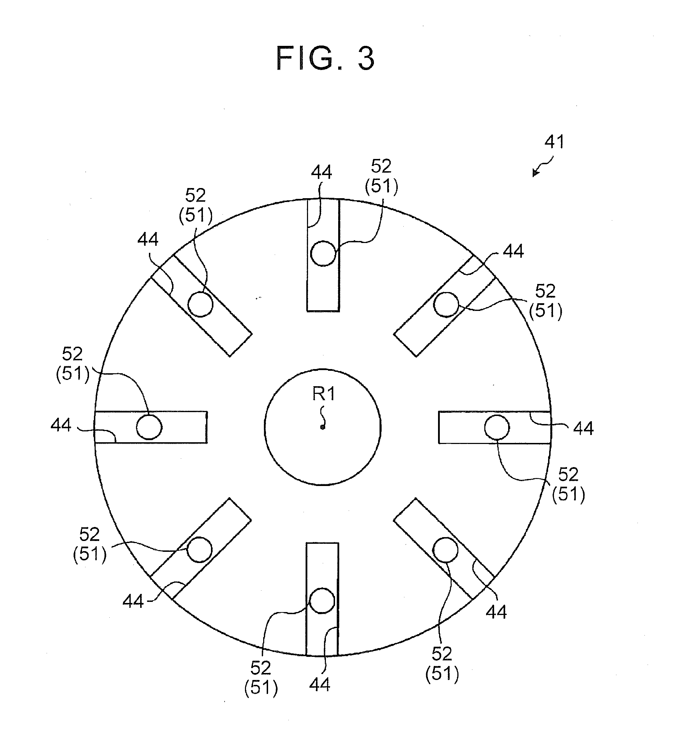

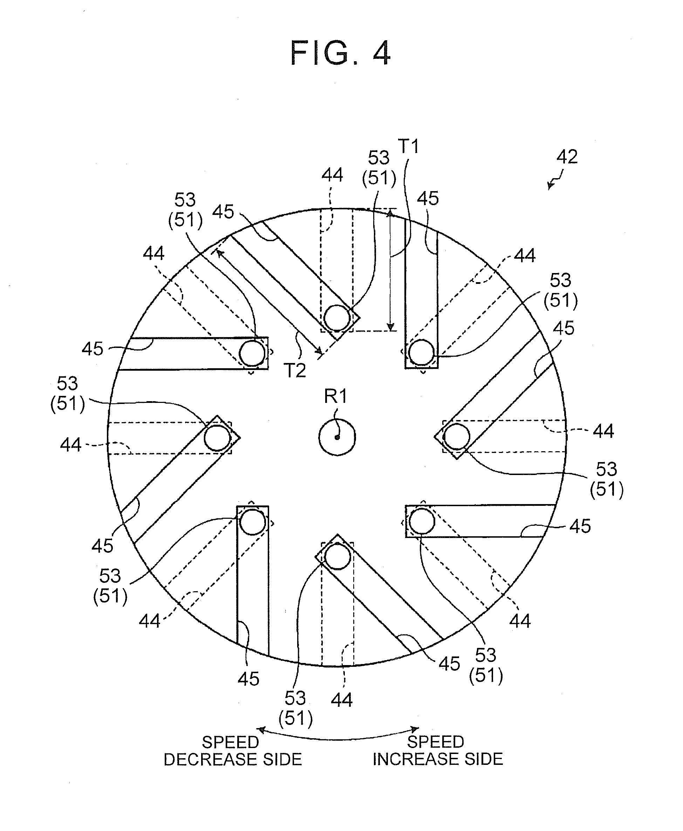

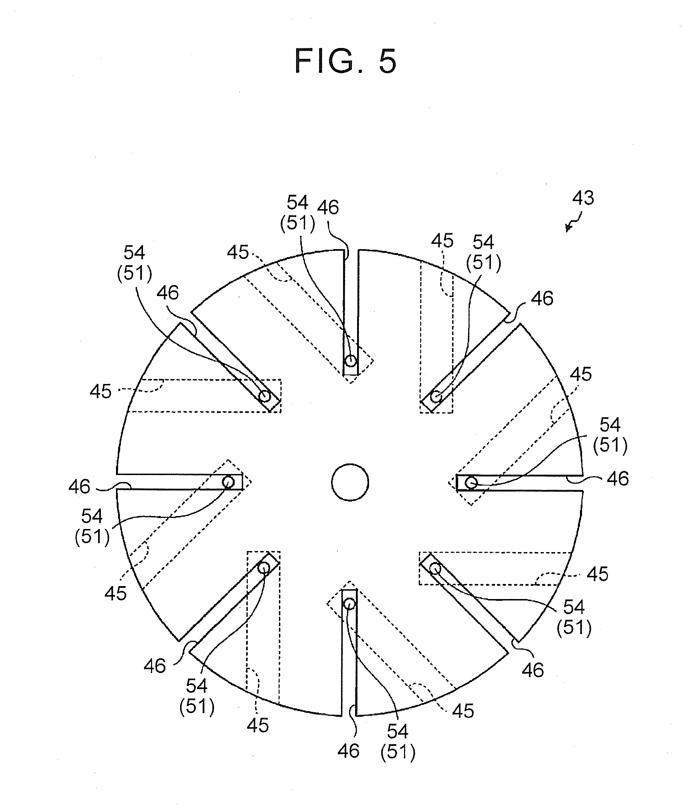

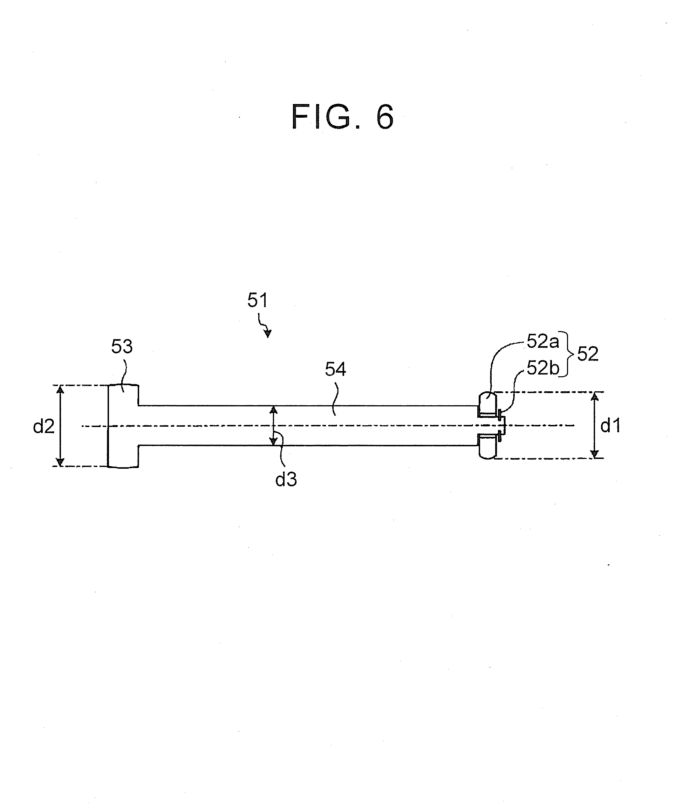

FIG. 1 is a schematic sectional view of a continuously variable transmission according to Embodiment 1, FIG. 2 is a partial sectional view of the continuously variable transmission according to Embodiment 1, FIG. 3 is a plane view to describe to describe a fixed carrier of the continuously variable transmission according to Embodiment 1, FIG. 4 is a plane view to describe a movable carrier of the continuously variable transmission according to Embodiment 1, FIG. 5 is a plane view to describe a plate of the continuously variable transmission according to Embodiment 1, and FIG. 6 is a configuration diagram illustrating a configuration of a support shaft of the continuously variable transmission according to Embodiment 1.

The continuously variable transmission of the present embodiment is provided in a vehicle, and transmits, to driving wheels of the vehicle, a power (torque) generated by a power source such as an internal combustion engine. The continuously variable transmission is a so-called traction drive mode continuously variable transmission that is able to transmit a power between rotating elements making contact with each other, by a fluid such as a traction fluid (transmission oil) provided between the rotating elements. The continuously variable transmission transmits a power (torque) by use of a resistance force (a traction force, a shear force of a traction oil film) caused when the traction fluid existing on a contact face between one rotating element and the other rotating element is sheared. The continuously variable transmission of the present embodiment is a so-called ball planetary-type continuously variable transmission (CVP: Continuously Variable Planetary).

More specifically, as illustrated in FIGS. 1, 2, a continuously variable transmission mechanism serving as a main part of a continuously variable transmission 1 of the present embodiment includes a first rotational member 10 as a first rotating element, a second rotational member 20 as a second rotating element, a sun roller 30 as a third rotating element, and a carrier 40 as a fourth rotating element and as a support rotating element, which have a common first rotation central axis R1 so as to be rotatable relative to each other. Further, the continuously variable transmission 1 includes: a plurality of planetary balls 50 as rolling members each of which has a second rotation central axis R2 that is different from the first rotation central axis R1; and a transmission shaft 60 serving as a rotation center of the first rotational member 10, the second rotational member 20, the sun roller 30, and the like. The continuously variable transmission 1 inclines the second rotation central axes R2 with respect to the first rotation central axis R1 so as to tilt the planetary balls 50 that are held by the carrier 40 in a freely tilting manner, thereby changing a transmission gear ratio between input and output.

Note that, in the following description, a direction along the first rotation central axis R1 and the second rotation central axis R2 is referred to as an axial direction, and a direction around the first rotation central axis R1 is referred to as a circumferential direction, unless otherwise specified. Further, a direction perpendicular to the first rotation central axis R1 is referred to as a radial direction, and especially, a side toward an inner side is referred to as a radial inside, and a side toward an outer side is referred to as a radial outside.

In the continuously variable transmission 1, transmission of a torque is typically performed via each planetary ball 50 among the first rotational member 10, the second rotational member 20, the sun roller 30, and the carrier 40. For example, in the continuously variable transmission 1, one of the first rotational member 10, the second rotational member 20, the sun roller 30, and the carrier 40 serves as an input portion of the torque (power), and at least one of the other rotating elements serves as an output portion of the torque. The continuously variable transmission 1 takes, as the transmission gear ratio, a ratio in rotation speed (the number of revolutions) between any one of the rotating elements which serves as the input portion and any one of the rotating elements which serves as the output portion. The continuously variable transmission 1 described herein is as follows: the first rotational member 10 serves as the input portion and the second rotational member 20 serves as the output portion.

Further, in the continuously variable transmission 1, the plurality of planetary balls 50 is disposed radially around a central axis (the first rotation central axis R1) of the transmission shaft 60. The planetary ball 50 is able to rotate (spin) around the second rotation central axis R2 as its rotation center. The planetary balls 50 are sandwiched between the first rotational member 10 and the second rotational member 20 which are placed on the transmission shaft 60 so as to be opposed to each other in the axial direction of the transmission shaft 60. Further, the planetary balls 50 are supported by the carrier 40 in a spinning manner. The continuously variable transmission 1 pushes at least either one of the first rotational member 10 and the second rotational member 20 against the planetary balls 50, so as to generate an appropriate frictional force (traction force) between the planetary balls 50 and a respective of the first rotational member 10, the second rotational member 20, and the sun roller 30, thereby enabling transmission of the torque therebetween. Further, the continuously variable transmission 1 tilts the planetary ball 50 on a tilting plane including the second rotation central axis R2 and the first rotation central axis R1, so as to change the ratio in rotation speed (the number of revolutions) between the first rotational member 10 and the second rotational member 20, thereby changing a ratio in rotation speed (the number of revolutions) between input and output.

Note that the continuously variable transmission 1 may be configured such that all of the first rotational member 10, the second rotational member 20, the sun roller 30, and the carrier 40 are rotatable relative to the transmission shaft 60, or may be configured such that at least one of the first rotational member 10, the second rotational member 20, the sun roller 30, and the carrier 40 is not rotatable relative to the transmission shaft 60. The following deals with an example in which a part of the carrier 40 is fixed to the transmission shaft 60, but the configuration is not limited to this. Here, the transmission shaft 60 is a fixed shaft formed in a cylindrical shape of which a central axis accords with the first rotation central axis R1, and configured to be fixed to a fixed part of the continuously variable transmission 1 with respect to a housing or a vehicle body (not shown), so as not to rotate relative to the fixed part.

Each constituent of the continuously variable transmission 1 is described below in detail.

The first rotational member 10 and the second rotational member 20 are a disk member (disk) or a ring member (ring) of which a central axis accords with the first rotation central axis R1, and disposed opposed to each other in the axial direction of the first rotation central axis R1 so as to sandwich each planetary ball 50. In this example, it is assumed that both members are ring members. The first rotational member 10 and the second rotational member 20 are rotatable relative to each other around the common first rotation central axis R1 as a rotation center.

The first rotational member 10 and the second rotational member 20 have, on their inner peripheral surfaces, contact faces 10a, 20a making contact with an outer peripheral curved surface of each planetary ball 50 on a radial outside. The contact faces 10a, 20a of the first rotational member 10 and the second rotational member 20 have a shape such as a concave arc surface having a curvature equivalent to a curvature of the outer peripheral curved surface of the planetary ball 50, a concave arc surface having a curvature different from the curvature of the outer peripheral curved surface, a convex arc surface, or a flat surface. Here, in a state of the after-mentioned reference position (a state where the first rotation central axis R1 is parallel to the second rotation central axis R2), the contact faces 10a, 20a are formed such that distances from the first rotation central axis R1 to their respective contact portions with the planetary ball 50 are equal to each other, and respective contact angles θ of the first rotational member 10 and the second rotational member 20 with respect to each planetary ball 50 are equal to each other.

Here, the contact angle θ is an angle from a reference to the contact portion between the planetary ball 50 and each contact face 10a, 20a. Herein, the radial direction is taken as the reference. The contact faces 10a, 20a of the first rotational member 10 and the second rotational member 20 with respect to the planetary ball 50 make point contact or surface contact with the outer peripheral curved surface of the planetary ball 50. Further, the contact face 10a, 20a of the first rotational member 10 the second rotational member 20 with respect to the planetary ball 50 are configured such that, when an axial force is added to the planetary ball 50 from the first rotational member 10 or the second rotational member 20, a force (a normal force Fn) in a radially inside and diagonal direction is added to the planetary ball 50.

The continuously variable transmission 1 causes the first rotational member 10 to function as a torque input portion (an input ring) at the time of normal driving of the continuously variable transmission 1 (at the time when a torque is input into the rotating element as the input portion). Further, the continuously variable transmission 1 causes the second rotational member 20 to function as a torque output portion (an output ring) at the time of normal driving of the continuously variable transmission 1. In the continuously variable transmission 1, an input shaft 11 is connected to the first rotational member 10 via a torque cam 70. Further, in the continuously variable transmission 1, an output shaft 21 is connected to the second rotational member 20 via a torque cam 71. The input shaft 11 is configured to include a tubular portion 11a, a disk portion 11b, etc. The input shaft 11 is configured such that a disk-portion-11b side thereof is connected to the first rotational member 10 via the torque cam 70 and a tubular-portion-11a side thereof is connected to a power-source side of the vehicle. The output shaft 21 is configured to include a first tubular portion 21a, a disk portion 21b, a second tubular portion 21c, etc. The output shaft 21 is configured such that a first-tubular-portion-21a side thereof is connected to the second rotational member 20 via a ring member 72 and the torque cam 71, and a second-tubular-portion-21c side thereof is connected to a driving-wheel side of the vehicle. The input shaft 11 and the output shaft 21 are provided so as to be rotatable relative to the transmission shaft 60 around the first rotation central axis R1 as a rotation center. The input shaft 11 and the output shaft 21 are also rotatable relative to each other via a bearing B1 and a thrust bearing TB.

The torque cams 70, 71 are torque axial force conversion mechanisms each for converting a running torque into an axial force along the first rotation central axis R1, and also serve as pressing force generation mechanisms. The axial forces generated by the torque cams 70, 71 are pressing forces to press the first rotational member 10 and the second rotational member 20 to each planetary ball 50. The torque cam 70 is disposed between the first rotational member 10 and the input shaft 11. The torque cam 71 is disposed between the second rotational member 20 and the output shaft 21. When a running torque is transmitted between the input shaft 11 and the first rotational member 10, the torque cam 70 generates a thrust (an axial force) toward a planetary-ball-50 side along the axial direction, with respect to the first rotational member 10 according to a magnitude of the torque to be transmitted. When a running torque is transmitted between the output shaft 21 and the second rotational member 20, the torque cam 71 generates a thrust (an axial force) toward a planetary-ball-50 side along the axial direction, with respect to the second rotational member 20 according to a magnitude of the torque to be transmitted.

Note that, in the continuously variable transmission 1, the first rotational member 10 can be assumed the torque output portion and the second rotational member 20 can be assumed the torque input portion, and in that case, a member provided as the input shaft 11 is used as the output shaft, and a member provided as the output shaft 21 is used as the input shaft. Further, in the continuously variable transmission 1, in a case where the sun roller 30 and the carrier 40 are used as the torque input portion and the torque output portion, another input shaft and another output shaft configured separately are connected to the sun roller 30 and the carrier 40, which will be described later.

The sun roller 30 is formed in a cylindrical shape of which a central axis accords with the first rotation central axis R1, and is supported by bearings RB1, RB2 so as to be rotatable relative to the transmission shaft 60 in the circumferential direction. That is, the sun roller 30 is disposed on the transmission shaft 60 so as to be rotatable relative to the transmission shaft 60, the first rotational member 10, the second rotational member 20, and the after-mentioned carrier 40 around the first rotation central axis R1 as a rotation center. Further, the sun roller 30 is positioned in the axial direction of the transmission shaft 60 by an outer ring of the bearing RB1, an outer ring of the bearing RB2, and the like, and is fixed so as not to be movable relative to the axial direction of the transmission shaft 60.

The sun roller 30 has an outer peripheral surface 31 making contact with the plurality of planetary balls 50. The plurality of planetary balls 50 is radially disposed on the outer peripheral surface 31 of the sun roller 30 generally at even intervals. Accordingly, the sun roller 30 is configured such that the outer peripheral surface 31 serves as a rolling contact surface at the time of spinning of the planetary balls 50. The sun roller 30 is able to roll (spin) each planetary ball 50 by its own rotative movement, and is also able to rotate in association with a rolling operation (a spinning operation) of each planetary ball 50.

Note that the sun roller 30 of the present embodiment has a block construction constituted by the following three parts: a first divided structure 32 supported by the bearing RB1 and the bearing RB2; a second divided structure 33 fixed to an outer peripheral surface of the first divided structure 32; and a third divided structure 34 supported by the outer peripheral surface of the first divided structure 32 via an angular bearing AB. This allows the continuously variable transmission 1 to reduce spin loss between the sun roller 30 and the planetary balls 50, thereby making it possible to restrain a decrease of mechanical efficiency of power transmission. In this case, the outer peripheral surface 31 of the sun roller 30 is constituted by an outer peripheral surface of the second divided structure 33 and an outer peripheral surface of the third divided structure 34. Note that the sun roller 30 does not need to be such a block construction.

The carrier 40 is disposed on the transmission shaft 60, and is rotatable relative to the first rotational member 10, the second rotational member 20, the sun roller 30, etc., around the first rotation central axis R1 as a rotation center. The carrier 40 holds a support shaft (spindle) 51 of the planetary ball 50 in such a manner that a tilting operation of the planetary ball 50 is performable.

Here, the planetary ball 50 is held by the carrier 40 via the support shaft 51 in a freely tilting manner. The planetary ball 50 is a rolling member that rolls over the outer peripheral surface 31 of the sun roller 30. The planetary ball 50 is preferably a perfect spheroid, but may have a shape that is spherical at least in a rolling direction, for example, a shape having an elliptical section such as a rugby ball. The planetary ball 50 is rotatably supported by the support shaft 51 that penetrates through a center thereof. The support shaft 51 supports the planetary ball 50 with the second rotation central axis R2 being taken as a rotation center, and respective end portions thereof project from the planetary ball 50. For example, the planetary ball 50 is able to rotate (that is, spin) relative to the support shaft 51 around the second rotation central axis R2 as a rotating axis, by means of radial bearings RB3, RB4 disposed between the planetary ball 50 and an outer peripheral surface of the support shaft 51. Accordingly, the planetary ball 50 is able to roll over the outer peripheral surface 31 of the sun roller 30 around the second rotation central axis R2 of the support shaft 51.

As illustrated in FIG. 1, a position to become a reference for the support shaft 51 is a position where the second rotation central axis R2 is parallel to the first rotation central axis R1. In a tilting plane including that own rotational central axis (the second rotation central axis R2) of the support shaft 51 which is formed at a reference position and the first rotation central axis R1, the support shaft 51 is able to swing (tilt) together with the planetary ball 50 between the reference position and a position inclined therefrom. This tilting is performed in the tilting plane around a center of the planetary ball 50 as a supporting point. Those respective end portions of the support shaft 51 which project from the planetary ball 50 are held by the carrier 40 in such a manner that a tilting operation of each planetary ball 50 is performable, as described below.

The carrier 40 supports the end portions of the support shaft 51 that supports the planetary ball 50 so as not to disturb the tilting operation of each planetary ball 50. The carrier 40 of the present embodiment includes a fixed carrier 41 as a fixed element, a movable carrier 42 as a movable element, and a plate 43. The fixed carrier 41, the movable carrier 42, and the plate 43 are each formed in an annular disk shape of which a central axis accords with the first rotation central axis R1, and provided on the transmission shaft 60. Herein, the fixed carrier 41 is disposed radially inside the first rotational member 10, the torque cam 70, etc., and the movable carrier 42 and the plate 43 are disposed radially inside the second rotational member 20, the torque cam 71, etc.

The fixed carrier 41 is provided on a first guide end portion 52 side, which is one end portion of the support shaft 51, so as not to be rotatable relative to the transmission shaft 60. An inner peripheral surface side of the fixed carrier 41 is fixed to a flange portion of the transmission shaft 60 via bolts or the like. The movable carrier 42 is disposed on a second guide end portion 53 side, which is the other end portion of the support shaft 51, so as to be opposed to the fixed carrier 41, and is provided so as to be rotatable relative to the transmission shaft 60. That is, the fixed carrier 41 and the movable carrier 42 are disposed opposed to each other in the axial direction of the first rotation central axis R1 with the planetary balls 50 being sandwiched therebetween. An inner peripheral surface side of the movable carrier 42 is supported on the outer peripheral surface of the transmission shaft 60 via a bearing or the like so that the movable carrier 42 is rotatable relative to the transmission shaft 60 around the first rotation central axis R1 as a rotation center. Accordingly, the movable carrier 42 and the fixed carrier 41 are rotatable relative to each other around the first rotation central axis R1 as a rotation center. The plate 43 is disposed between the planetary balls 50 and the movable carrier 42 in the axial direction of the first rotation central axis R1 so as not to be rotatable relative to the fixed carrier 41. The plate 43 is fixed to the fixed carrier 41 via a plurality of connecting shafts and the like along the axial direction of the first rotation central axis R1. The fixed carrier 41 and the plate 43 are connected to each other via the connecting shafts and the like so as to form a basket-shaped structure as a whole. Accordingly, the movable carrier 42 and the plate 43 are rotatable relative to each other around the first rotation central axis R1 as a rotation center. Further, the fixed carrier 41 includes a first guide portion 44, the movable carrier 42 includes a second guide portion 45, and the plate 43 includes a slit portion 46.

As illustrated in FIGS. 1, 2, 3, the first guide portion 44 is formed in the fixed carrier 41 so as to extend in a radial direction perpendicular to the first rotation central axis R1 and to be opened toward the planetary ball 50. The first guide portion 44 is formed as a bottomed guide groove, that is, the first guide portion 44 is configured so as not to penetrate through the fixed carrier 41 in the axial direction of the first rotation central axis R1. Herein, the first guide portion 44 is formed in a linear shape and an end portion thereof on a side opposite to a first-rotation-central-axis-R1 side, that is, a radially outside end portion is opened. A plurality of (here, eight) first guide portions 44 is provided radially around the first rotation central axis R1 so as to correspond to the plurality of (here, eight) planetary balls 50. The plurality of first guide portions 44 is provided at even intervals around the first rotation central axis R1. The first guide end portion 52 of the support shaft 51 is inserted into the first guide portion 44, so that the first guide portion 44 is able to guide a movement of the first guide end portion 52 of the support shaft 51. Herein, the first guide end portion 52 of the support shaft 51 functions as a guide end portion of which a radial movement is guided by the first guide portion 44.

As illustrated in FIGS. 1, 2, 4, the second guide portion 45 is formed in the movable carrier 42 so as to extend in a direction inclined with respect to the radial direction perpendicular to the first rotation central axis R1 and to be opened toward the planetary ball 50. The second guide portion 45 is formed as a bottomed guide groove, that is, the second guide portion 45 is configured so as not to penetrate through the movable carrier 42 in the axial direction of the first rotation central axis R1. Herein, the second guide portion 45 is formed in a linear shape and is formed at a position offset generally in parallel to that straight line along a radial direction which passes through the first rotation central axis R1. Further, a radially outside end portion of the second guide portion 45 is opened. Similarly to the first guide portion 44, a plurality of (here, eight) second guide portions 45 is provided so as to correspond to the plurality of (here, eight) planetary balls 50. Each of the second guide portions 45 is formed at a position where the each of the second guide portions 45 partially overlaps and intersects with its corresponding first guide portion 44 when viewed in the axial direction of the first rotation central axis R1 (when viewed in a direction of an arrow A in FIG. 1). This intersection portion between the first guide portion 44 and the second guide portion 45 moves along the radial direction, when the fixed carrier 41 and the movable carrier 42 rotate relative to each other around the first rotation central axis R1 as a rotation center. The second guide end portion 53 of the support shaft 51 is inserted into the second guide portion 45, so that the second guide portion 45 is able to guide a movement of the second guide end portion 53 of the support shaft 51. Herein, the second guide end portion 53 of the support shaft 51 functions as a guide end portion of which a movement is guided by the second guide portion 45. When an inner wall surface of the second guide portion 45 abuts with an outer peripheral surface of the second guide end portion 53, the second guide portion 45 supports and positions the second guide end portion 53 at a predetermined position in the radial direction.

Note that the second guide portion 45 may be formed in an arc shape extending in a direction inclined with respect to the radial direction perpendicular to the first rotation central axis R1, so as to be formed at a position where the second guide portion 45 partially overlaps and intersects with the first guide portion 44 when viewed in the axial direction of the first rotation central axis R1.

As illustrated in FIGS. 1, 2, 5, the slit portion 46 is formed in the plate 43 so as to extend in the radial direction perpendicular to the first rotation central axis R1 and to penetrate therethrough in the axial direction of the first rotation central axis R1. That is, the slit portion 46 is formed as a slit hole penetrating through the plate 43 in the axial direction of the first rotation central axis R1. Herein, the slit portion 46 is formed in a linear shape and a radially outside end portion thereof is opened. Similarly to the first guide portion 44, a plurality of (here, eight) slit portions 46 is provided radially around the first rotation central axis R1 so as to correspond to the plurality of (here, eight) planetary balls 50. The plurality of slit portions 46 is provided at even intervals around the first rotation central axis R1. Each of the slit portions 46 is opposed to its corresponding first guide portion 44 in the axial direction of the first rotation central axis R1 in a state where the fixed carrier 41 is fixed to the plate 43. Accordingly, each of the slit portions 46 is formed at a position where the each of the slit portions 46 partially overlaps and intersects with its corresponding second guide portion 45 when viewed in the axial direction of the first rotation central axis R1 (when viewed in the direction of the arrow A in FIG. 1). Similarly to the intersection portion between the first guide portion 44 and the second guide portion 45, this intersection portion between the slit portion 46 and the second guide portion 45 moves along the radial direction, when the fixed carrier 41 and the movable carrier 42 rotate relative to each other around the first rotation central axis R1 as a rotation center. Further, an intermediate portion 54 between respective end portions of the support shaft 51, namely, between the first guide end portion 52 and the second guide end portion 53 is inserted into the slit portion 46, thereby allowing a movement of the intermediate portion 54 of the support shaft 51.

The carrier 40 configured as such holds the support shaft 51 by means of the first guide portion 44, the second guide portion 45, and the slit portion 46 in such a state where a tilting operation of the planetary ball 50 is performable. The carrier 40 tilts the support shaft 51 and the planetary ball 50 by a relative displacement between the first guide portion 44 and the second guide portion 45 in association with a relative rotation between the fixed carrier 41 and the movable carrier 42, thereby changing a transmission gear ratio, which is a rotation speed ratio between respective rotating elements.

Here, the continuously variable transmission 1 is configured such that, when a tilting angle of the planetary ball 50 is at the reference position, namely, zero degree, the first rotational member 10 and the second rotational member 20 rotate at the same rotation speed (the same number of revolutions). That is, at this time, a rotation ratio (a ratio in rotation speed or the number of revolutions) between the first rotational member 10 and the second rotational member 20 is 1, and a transmission gear ratio γ is 1. For example, when respective rotation speeds of the first rotational member 10 and the second rotational member 20 are assumed "V1" and "V2," a rotation ratio therebetween is "V1/V2." In the meantime, as shown in an alternate long and short dash line in FIG. 2, when the planetary ball 50 is tilted together with the support shaft 51 from the reference position, a distance from a central axis of the support shaft 51 to the contact portion with the first rotational member 10 changes and a distance from the central axis of the support shaft 51 to the contact portion with the second rotational member 20 also changes. Hereby, in the continuously variable transmission 1, either of the first rotational member 10 and the second rotational member 20 rotates at a high speed and the other one rotates at a low speed, as compared with a case of the reference position. For example, when the planetary ball 50 is tilted to one side, the second rotational member 20 rotates at a lower speed than the first rotational member 10 (a decrease in speed), and when the planetary ball 50 is tilted to the other side, the second rotational member 20 rotates at a higher speed than the first rotational member 10 (an increase in speed). Accordingly, the continuously variable transmission 1 is able to continuously change the ratio in rotation speed (the transmission gear ratio γ) between the respective rotating elements by changing the tilting angle. Note that at the time of the increase in speed here (γ < 1), an upper planetary ball 50 in FIG. 1 is tilted in a counterclockwise direction on a plane of paper, and a lower planetary ball 50 is tilted in a clockwise direction on the plane of paper. Further, at the time of the decrease in speed here (γ > 1), the upper planetary ball 50 in FIG. 1 is tilted in the clockwise direction on the plane of paper, and the lower planetary ball 50 is tilted in the counterclockwise direction on the plane of paper.

The continuously variable transmission 1 of the present embodiment functions as a mechanism for the carrier 40 to change the transmission gear ratio γ. The continuously variable transmission 1 inclines the second rotation central axis R2 of each planetary ball 50 by means of the carrier 40 to tilt the each planetary ball 50, so that the tilting angle of the planetary ball 50 changes, thereby changing the transmission gear ratio γ.

Herein, the carrier 40 gives, to the support shaft 51, a force for the support shaft 51 to be tilted, that is, a tilting force according to a relative rotation between the movable carrier 42 and the fixed carrier 41, thereby tilting the planetary ball 50 together with the support shaft 51. That is, the carrier 40 is configured such that, when a rotational power is transmitted to the movable carrier 42 from a driving device such as a motor via a transmission member such as a worm gear according to control by ECU or the like (not shown), the movable carrier 42 rotates relative to the fixed carrier 41. Accordingly, the intersection portions of the second guide portion 45 with respect to the first guide portion 44 and the slit portion 46 move along the radial direction when their phases shift due to relative displacements of the first guide portion 44 and the slit portion 46 with respect to the second guide portion 45. At this time, in the support shaft 51, due to a tilting force that occurs according to a relative rotation between the movable carrier 42 and the fixed carrier 41, the second guide end portion 53 moves to be pushed up or pushed down while being guided along the second guide portion 45, and the first guide end portion 52 moves while being guided along the first guide portion 44. That is, the support shaft 51 is configured such that, when the first guide end portion 52 moves radially outside and the second guide end portion 53 moves radially inside, or when the second guide end portion 53 moves radially outside and the first guide end portion 52 moves radially inside, the second rotation central axis R2 swings relative to the first rotation central axis R1.

As such, the carrier 40 is able to perform tilting between a state where the second rotation central axis R2 of each planetary ball 50 is placed in a single plane including the first rotation central axis R1 and is parallel to the first rotation central axis R1 in the single plane, that is, a state where the second rotation central axis R2 is placed at the reference position, and a state where the second rotation central axis R2 is inclined from that parallel state. As a result, a tilting angle of the support shaft 51, which is an inclination angle of the second rotation central axis R2 relative to the first rotation central axis R1, is changed according to a displacement between a radial position of the first guide end portion 52 and a radial position of the second guide end portion 53, thereby tilting the planetary ball 50 in association with this. Thus, the carrier 40 is able to tilt the planetary ball 50 by giving a tilting force to the support shaft 51 so as to incline the support shaft 51 and thereby incline the second rotation central axis R2. Accordingly, in the continuously variable transmission 1, the tilting of the planetary ball 50 changes the distance from the central axis of the support shaft 51 to the contact portion between the first rotational member 10 and the planetary ball 50, and also changes the distance from the central axis of the support shaft 51 to the contact portion between the planetary ball 50 and the second rotational member 20, thereby changing the transmission gear ratio. At this time, in the carrier 40, the intermediate portion 54 of the support shaft 51 is allowed to swing in the radial direction by the slit portion 46 in the plate 43. Note that, in the continuously variable transmission 1 of the present embodiment, when the movable carrier 42 rotates in a counterclockwise direction on a plane of paper in FIG. 4, the second guide end portion 53 moves to a central side (the first rotation central axis R1), so that the transmission gear ratio is changed to a speed increase side within a predetermined change gear width. Further, in the continuously variable transmission 1, when the movable carrier 42 rotates in a clockwise direction on the plane of paper in FIG. 4, the second guide end portion 53 moves to an outer side (a side opposite to the first rotation central axis R1), so that the transmission gear ratio is changed to a speed decrease side within a predetermined change gear width.

When a torque is transmitted to the input shaft 11, for example, the continuously variable transmission 1 configured as described above is able to transmit the torque to the output shaft 21 via the torque cam 70, the first rotational member 10, the planetary balls 50, the second rotational member 20, the torque cam the 71, etc. At this time, when the torque is transmitted to the first rotational member 10 from the input shaft 11, for example, the continuously variable transmission 1 causes the first rotational member 10 and each planetary ball 50, and the second rotational member 20 and each planetary ball 50 to relatively come close to each other according to a magnitude of the torque to be transmitted by actions of the torque cam 70, the torque cam 71, etc., so that pressing forces (pressing force loads) toward a direction to press against each other are caused. Hereby, in the continuously variable transmission 1, a transmission torque capacity according to the pressing forces is secured, and traction forces (frictional forces) are caused between the first rotational member 10 and each planetary ball 50 and between each planetary ball 50 and the second rotational member 20 according to this transmission torque capacity. As a result, the continuously variable transmission 1 is able to transmit a power (the torque) between the first rotational member 10 and each planetary ball 50 and between each planetary ball 50 and the second rotational member 20.

Further, the pressing forces caused by the torque cam 70 and the torque cam 71 are transmitted to the sun roller 30 via each planetary ball 50 due to interaction according to shapes and positional relationships of the contact faces 10a, 20a of the first rotational member 10 and the second rotational member 20 and the outer surface of each planetary ball 50. Hereby, in the continuously variable transmission 1, a traction force (a frictional force) occurs between each planetary ball 50 and the sun roller 30 according to the pressing forces by the torque cam 70 and the torque cam 71, thereby making it possible to mutually transmit the power (torque) between each planetary ball 50 and the sun roller 3.

Accordingly, in the continuously variable transmission 1, a frictional force (a traction force) occurs between the first rotational member 10 and each planetary ball 50 along with a rotation of the first rotational member 10, so that each planetary ball 50 begins to spin. Then, in the continuously variable transmission 1, due to the rotation of each planetary ball 50, frictional forces also occur between each planetary ball 50 and the second rotational member 20 and between each planetary ball 50 and the sun roller 30, so that the second rotational member 20 and the sun roller 30 also begin to rotate. Similarly, in the continuously variable transmission 1, each planetary ball 50 begins to spin along with a rotation of the second rotational member 20, so that the first rotational member 10 and the sun roller 30 also begin to rotate. Thus, the continuously variable transmission 1 is able to continuously change the transmission gear ratio γ such that the carrier 40 tilts each planetary ball 50 by a power from the driving device as described above so as to change the tilting angle of each planetary ball 50.

Note that, in the continuously variable transmission 1 of the present embodiment, oil (which may be used as the traction fluid, too) as a lubricating medium is supplied to a sliding portion of each member. For example, as illustrated in FIG. 2, in the continuously variable transmission 1, oil discharged from an oil pump 80 is supplied to that shaft center portion (a central portion) of the planetary ball 50 which serves as the sliding portion, via a shaft-portion axial oil passage 81, a shaft-portion radial oil passage 82, a shaft-portion annular oil passage 83, a movable-carrier radial oil passage 84, the second guide portion 45, a support-shaft direction oil passage 85, etc., so as to lubricate the sliding portion.

Here, the shaft-portion axial oil passage 81, the shaft-portion radial oil passage 82, and the shaft-portion annular oil passage 83 are oil supply passages formed in the transmission shaft 60. The shaft-portion axial oil passage 81 is formed inside the transmission shaft 60 along the axial direction such that one end portion thereof is opened and the other end portion thereof is connected to an discharge opening side of the oil pump 80. The shaft-portion radial oil passage 82 is formed inside the transmission shaft 60 along the radial direction such that a radially inside end portion thereof communicates with the shaft-portion axial oil passage 81, and a radially outside end portion thereof communicates with the shaft-portion annular oil passage 83. The shaft-portion annular oil passage 83 is formed in an annular shape on the outer peripheral surface of the transmission shaft 60, and is opened toward the radial outside. The movable-carrier radial oil passage 84 is formed inside the movable carrier 42 along the radial direction such that a radially inside end portion thereof is opened at a position opposed to the shaft-portion annular oil passage 83, and a radially outside end portion thereof is opened to a radially outside portion and the like of the second guide portion 45. The support-shaft direction oil passage 85 is a supply passage for supplying to the planetary ball 50 the oil supplied into the second guide portion 45. The support-shaft direction oil passage 85 is formed inside the support shaft 51 along the axial direction such that an end portion thereof on a second guide end portion 53 side is opened toward the second guide portion 45, and the other end portion thereof is opened in vicinity to the shaft center portion (the central portion) of the planetary ball 50.

Accordingly, the oil discharged from the oil pump 80 is dropped and supplied into the second guide portion 45 via the shaft-portion axial oil passage 81, the shaft-portion radial oil passage 82, the shaft-portion annular oil passage 83, and the movable-carrier radial oil passage 84. Then, the oil supplied into the second guide portion 45 is supplied to the shaft center portion of the planetary ball 50 via the support-shaft direction oil passage 85 from the second guide end portion 53 side of the support shaft 51 and lubricates sliding portions such as the shaft center portion of the planetary ball 50, the support shaft 51, the radial bearings RB3, RB4, and the like.

In the meantime, the continuously variable transmission 1 of the present embodiment is configured such that, at the time when the planetary ball 50 is tilted together, that is, at the time when the transmission gear ratio is changed, a moving distance of the first guide end portion 52 (hereinafter occasionally referred to as "a travel amount of the first guide end portion 52") and a moving distance of the second guide end portion 53 (hereinafter occasionally referred to as "a travel amount of the second guide end portion 53") are different from each other. That is, the support shaft 51 is configured such that one of the travel amount of the first guide end portion 52 and the travel amount of the second guide end portion 53 in the tilting operation is relatively large and the other one is relatively small. The travel amounts of the first guide end portion 52 and the second guide end portion 53 in the tilting operation correspond to respective rolling distances of the first guide end portion 52 and the second guide end portion 53 at the time when the first guide end portion 52 and the second guide end portion 53 are guided to move along the first guide portion 44 and the second guide portion 45 in the tilting operation of the planetary ball 50 and the support shaft 51.

The continuously variable transmission 1 is configured, for example, such that the planetary ball 50 and the fixed carrier 41 are disposed adjacent to each other in the axial direction of the first rotation central axis R1, while the plate 43 is provided between the planetary ball 50 and the movable carrier 42. Because of this, as illustrated in FIG. 2, the continuously variable transmission 1 is configured such that a distance L1 from a contact point of the first guide end portion 52 with a guide face (a wall surface) of the first guide portion 44 to a rolling center of the planetary ball 50 is different from a distance L2 from a contact point of the second guide end portion 53 with a guide face (a wall surface) of the second guide portion 45 and the rolling center of the planetary ball 50. Accordingly, in the continuously variable transmission 1, the first guide end portion 52 and the second guide end portion 53 have different locus lengths in the tilting operation, that is, their travel amounts are different from each other. Here, the continuously variable transmission 1 is configured such that, in consideration of a positional relationship among the fixed carrier 41, the movable carrier 42, and the plate 43, the distance L1 is relatively small, and the distance L2 is relatively large. As a result, the continuously variable transmission 1 is configured such that the travel amount of the first guide end portion 52 in the tilting operation is relatively small and the travel amount of the second guide end portion 53 is relatively large.

Further, the continuously variable transmission 1 of the present embodiment is configured such that an outside diameter d1 of the first guide end portion 52 and an outside diameter d2 of the second guide end portion 53 have a predetermined magnitude relationship as illustrated in FIG. 2, thereby realizing a smooth change gear operation.

More specifically, an outside diameter of that one of the first guide end portion 52 and the second guide end portion 53 which has a relatively large travel amount in the tilting operation is relatively larger than an outside diameter of the other one which has a relatively small travel amount in the tilting operation. Here, as described above, the continuously variable transmission 1 is configured such that the travel amount (see a travel amount T1 illustrated in FIG. 4) of the first guide end portion 52 in the tilting operation is relatively small, and the travel amount (see a travel amount T2 illustrated in FIG. 4) of the second guide end portion 53 is relatively large. Accordingly, the continuously variable transmission 1 is configured such that the outside diameter d2 of the second guide end portion 53 is relatively large and the outside diameter d1 of the first guide end portion 52 is relatively small.

More specifically, the continuously variable transmission 1 is configured so that a ratio between the outside diameter d1 of the first guide end portion 52 and the outside diameter d2 of the second guide end portion 53 is equivalent to a ratio between the travel amount of the first guide end portion 52 and the travel amount of the second guide end portion 53 in the tilting operation. Here, as described above, the travel amount of the first guide end portion 52 in the tilting operation is determined based on the distance L1, and the travel amount of the second guide end portion 53 in the tilting operation is determined based on the distance L2. Accordingly, the ratio between the outside diameter d1 of the first guide end portion 52 and the outside diameter d2 of the second guide end portion 53 is equivalent to a ratio between the distance L1 and the distance L2.

For example, in a case where the continuously variable transmission 1 is configured such that the travel amount of the first guide end portion 52 and the travel amount of the second guide end portion 53 in the tilting operation are different from each other, and the outside diameter d1 of the first guide end portion 52 is hypothetically equivalent to the outside diameter d2 of the second guide end portion 53, a smooth change gear operation might be obstructed. In this case, in the continuously variable transmission 1, when the support shaft 51 is tilted together with the planetary ball 50, even if either one of the end portions rolls and is guided smoothly, a large frictional force might occur in the other end portion due to the difference in travel amount. Further in this case, when the continuously variable transmission 1 uses a traction fluid, for example, a high torque is added to the support shaft 51. This might result in that the traction fluid is solidified and a torque (gear change torque) required for the tilting operation increases between the first guide end portion 52, the second guide end portion 53 and the first guide portion 44, the second guide portion 45.

In contrast, in the continuously variable transmission 1 configured as described above, the outside diameter d2 of the second guide end portion 53 having a relatively large travel amount in the tilting operation is configured to be relatively larger than the outside diameter d1 of the first guide end portion 52 having a relatively small travel amount in the tilting operation. Accordingly, when the support shaft 51 is tilted together with the planetary ball 50 in association with movements of the respective end portions, i.e., the first guide end portion 52 and the second guide end portion 53 to be rolled and guided in the first guide portion 44 and the second guide portion 45, the continuously variable transmission 1 is able to restrain occurrence of large frictional forces in the respective end portions due to the difference in travel amount. For example, the continuously variable transmission 1 is able to eliminate slide frictions on respective contact portions of the first guide end portion 52 and the second guide end portion 53 with respect to the guide faces of the first guide portion 44 and the second guide portion 45 which slide frictions are caused in association with the tilting operation, thereby making it possible to restrain abrasion or the like by the slide frictions. Here, the continuously variable transmission 1 is configured such that the ratio between the outside diameter d1 of the first guide end portion 52 and the outside diameter d2 of the second guide end portion 53 is equivalent to the ratio between the travel amount of the first guide end portion 52 and the travel amount of the second guide end portion 53 in the tilting operation (or the ratio between the distance L1 and the distance L2). Accordingly, the continuously variable transmission 1 is able to surely restrain frictions in the respective end portions, i.e., the first guide end portion 52 and the second guide end portion 53, thereby making it possible to minimize a gear change torque by the frictions. Hereby, the continuously variable transmission 1 is able to realize a smooth change gear operation. This further allows the continuously variable transmission 1 to restrain a torque (gear change torque) required for the tilting operation from increasing between the first guide end portion 52, the second guide end portion 53 and the first guide portion 44, the second guide portion 45, thereby improving controllability.

Here, it is preferable that the continuously variable transmission 1 of the present embodiment have a block construction for at least either one of the first guide end portion 52 and the second guide end portion 53, and the intermediate portion 54 (a body portion of the support shaft 51). That is, it is preferable that at least either one of the first guide end portion 52 and the second guide end portion 53 be formed separately from the intermediate portion 54 of the support shaft 51, so as to be assembled to the intermediate portion 54.

As illustrated in FIGS. 1, 2, 6, the support shaft 51 of the present embodiment is configured such that the second guide end portion 53 is formed integrally with the intermediate portion 54, and the first guide end portion 52 is formed separately from the intermediate portion 54. The support shaft 51 is formed in a cylindrical shape as a whole including the first guide end portion 52, the second guide end portion 53, and the intermediate portion 54. The support shaft 51 is configured such that the outside diameter d1 of the first guide end portion 52, the outside diameter d2 of the second guide end portion 53, and the outside diameter d3 of the intermediate portion 54 satisfy [d3 < d1 < d2].

The second guide end portion 53 is formed integrally with the intermediate portion 54. In the meantime, the first guide end portion 52 is configured to include a roller 52a formed separately from the intermediate portion 54, such that the roller 52a is assembled to the intermediate portion 54 in a relatively rotatable manner around the intermediate portion 54 as a rotation center. The roller 52a is assembled to the intermediate portion 54 via a snap ring 52b or the like so as not to be removed therefrom.

The continuously variable transmission 1 is configured such that the first guide end portion 52 is formed separately from the intermediate portion 54 and assembled to the intermediate portion 54, thereby improving an assembly characteristic of the radial bearings RB3, RB4 in a case where the radial bearings RB3, RB4 and the like are provided between the planetary ball 50 and the support shaft 51. Further, the continuously variable transmission 1 is configured such that at least either one of the first guide end portion 52 and the second guide end portion 53, herein, the first guide end portion 52 is configured to include the roller 52a to be assembled to the intermediate portion 54 so as to be rotatable relative to the intermediate portion 54. Hereby, the continuously variable transmission 1 is able to further surely restrain a friction from occurring in either of the first guide end portion 52 and the second guide end portion 53 in the tilting operation.

The continuously variable transmission 1 according to the embodiment described above includes the transmission shaft 60, the first rotational member 10 and the second rotational member 20, the planetary ball 50, the support shaft 51, and the carrier 40. The transmission shaft 60 serves as a rotation center. The first rotational member 10 and the second rotational member 20 are disposed opposed to each other in the axial direction of the transmission shaft 60 and are rotatable relative to each other around the common first rotation central axis R1 as a rotation center. The planetary ball 50 is rotatable around, as a rotation center, the second rotation central axis R2 that is different from the first rotation central axis R1. The planetary ball 50 is sandwiched between the first rotational member 10 and the second rotational member 20 in such a manner that a torque is transmittable between the first rotational member 10 and the second rotational member 20. The support shaft 51 supports the planetary ball 50 with the second rotation central axis R2 being taken as a rotation center, and the first guide end portions 52, 53 project from the planetary ball 50. The carrier 40 is disposed on the transmission shaft 60 so as to be rotatable relative to the first rotational member 10 and the second rotational member 20 around the first rotation central axis R1 as a rotation center. The carrier 40 includes the fixed carrier 41 and the movable carrier 42 and holds the support shaft 51. The fixed carrier 41 is provided on the first guide end portion 52 side of the support shaft 51, so as not to be rotatable relative to the transmission shaft 60. The movable carrier 42 is disposed on the second guide end portion 53 side of the support shaft 51, so as to be opposed to the fixed carrier 41, and is provided so as to be rotatable relative to the transmission shaft 60. The carrier 40 holds the support shaft 51 by means of the first guide portion 44 and the second guide portion 45 in such a state where a tilting operation of the planetary ball 50 is performable. The first guide portion 44 is formed in the fixed carrier 41 so as to extend in the direction perpendicular to the first rotation central axis R1 and to be opened toward the planetary ball 50. The first guide end portion 52 of the support shaft 51 is inserted into the first guide portion 44, so that the first guide portion 44 is able to guide a movement of the first guide end portion 52. The second guide portion 45 is formed in the movable carrier 42 so as to extend in the direction inclined with respect to the direction perpendicular to the first rotation central axis R1 and to be opened toward the planetary ball 50. The second guide end portion 53 of the support shaft 51 is inserted into the second guide portion 45, so that the second guide portion 45 is able to guide a movement of the second guide end portion 53. The carrier 40 tilts the planetary ball 50 together with the support shaft 51 by a relative displacement between the first guide portion 44 and the second guide portion 45 in association with a relative rotation between the fixed carrier 41 and the movable carrier 42, thereby changing a transmission gear ratio, which is a rotation speed ratio between respective rotating elements. The support shaft 51 is configured such that either one of the moving distance (the travel amount) of the first guide end portion 52 and the moving distance (the travel amount) of the second guide end portion 53 at the time when the support shaft 51 is tilted together with the planetary ball 50 is relatively large, and the other one of the moving distances is relatively small. An outside diameter of that one of the first guide end portion 52 and the second guide end portion 53 which has a relatively large moving distance (herein, the outside diameter d2 of the second guide end portion 53) is relatively larger than an outside diameter of the other one which has a relatively small moving distance (herein, the outside diameter d1 of the first guide end portion 52).

Accordingly, when the outside diameter d2 of the second guide end portion 53 having a relatively large travel amount in the tilting operation is configured to be relatively larger than the outside diameter d1 of the first guide end portion 52, the continuously variable transmission 1 is able to restrain a large frictional force from occurring in the first guide end portion 52 and the second guide end portion 53 at the time when the support shaft 51 is tilted together with the planetary ball 50. As a result, the continuously variable transmission 1 is able to realize a smooth change gear operation.

### [Embodiment 2]

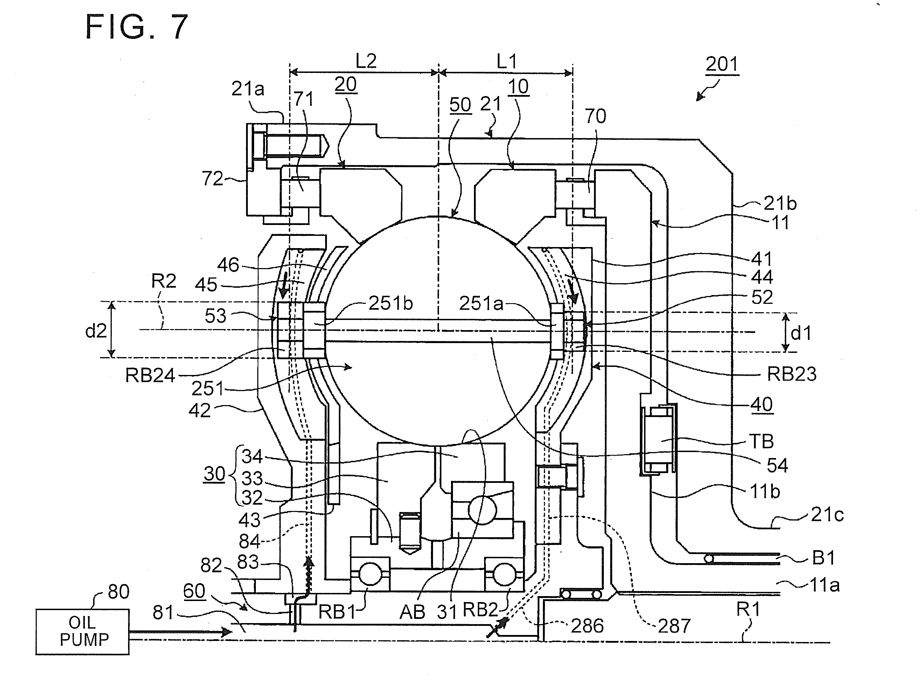

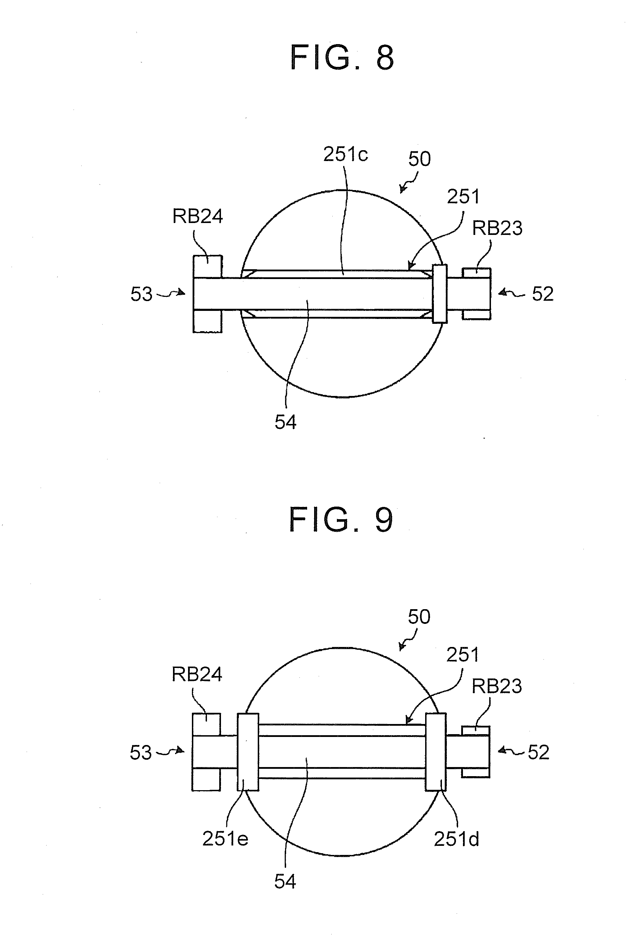

FIG. 7 is a partial sectional view of a continuously variable transmission according to Embodiment 2, and FIGS. 8, 9, 10 are configuration diagrams illustrating configurations of support shafts of continuously variable transmissions according to modified embodiments. The continuously variable transmission according to Embodiment 2 is different from Embodiment 1 in the configuration of the support shaft. As for the other configurations, actions, and effects that are common in the above embodiment, redundant descriptions thereof are omitted as much as possible.

The continuously variable transmission 1 described in FIG. 1 is configured such that the planetary ball 50 and the support shaft 51 are rotatable relative to each other by the radial bearings RB3, RB4 disposed between the outer peripheral surface of the support shaft 51 and the planetary ball 50 (see FIG. 1).

On the other hand, a continuously variable transmission 201 of the present embodiment illustrated in FIG. 7 is configured such that a support shaft 251 is provided so as to be rotatable integrally with a planetary ball 50. That is, the planetary ball 50 and the support shaft 251 are fixed so as not to be relatively rotatable in a circumferential direction of a second rotation axis R1, in other words, in a rotation direction. The support shaft 251 is configured to include a bolt 251a serving as an intermediate portion 54, and a nut 251b fastened to the bolt 251a. The bolt 251a of the support shaft 251 is inserted into one end of a through hole formed into the planetary ball 50, and the nut 251b is fastened to the bolt 251a on the other end side. The support shaft 251 is provided so as not to rotate relative to the planetary ball 50 by a fastening power between the bolt 251a and the nut 251b, in other words, the support shaft 251 is provided so as to be rotatable integrally therewith.

A first guide end portion 52 is configured to include a needle bearing RB23 as a first bearing provided between the first guide end portion 52 and a first guide portion 44, and a second guide end portion 53 is configured to include a needle bearing RB24 as a second bearing provided between the second guide end portion 53 and a second guide portion 45. That is, the support shaft 251 is configured such that the first guide end portion 52 is rotatably supported by the first guide portion 44 via the needle bearing RB23, and the second guide end portion 53 is rotatably supported by the second guide portion 45 via the needle bearing RB24.

Here, the first guide end portion 52, as well as the needle bearing RB23, is inserted into the first guide portion 44, so that the first guide portion 44 is able to guide a movement of the first guide end portion 52 together with the needle bearing RB23. The second guide end portion 53, as well as the needle bearing RB24, is inserted into the second guide portion 45, so that the second guide portion 45 is able to guide a movement of the second guide end portion 53 together with the needle bearing RB24. Herein, an outside diameter d1 of the first guide end portion 52 corresponds to an outside diameter of an outer ring of the needle bearing RB23. An outside diameter d2 of the second guide end portion 53 corresponds to an outside diameter of an outer ring of the needle bearing RB24.

The planetary ball 50 and the support shaft 251 configured as described above are supported by a fixed carrier 41 and a movable carrier 42 via the needle bearing RB23 and the needle bearing RB24 of the first guide end portion 52 and the second guide end portion 53. As such, the planetary ball 50 and the support shaft 251 are rotatable integrally around the second rotation central axis R2 as a rotation center, and are also able to tilt integrally.

Here, the continuously variable transmission 201 is configured to include a shaft-portion radial oil passage 286 and a fixed-carrier radial oil passage 287 as supply passages for supplying oil to sliding portions of respective members, instead of the support-shaft direction oil passage 85. The shaft-portion radial oil passage 286 is formed inside a transmission shaft 60 along a radial direction such that a radially inside end portion thereof communicates with a shaft-portion axial oil passage 81 and a radially outside end portion thereof is opened toward a radial outside. The fixed-carrier radial oil passage 287 is formed inside the fixed carrier 41 along the radial direction such that a radially inside end portion thereof is opened at a position opposed to the opening of the shaft-portion radial oil passage 286 and a radially outside end portion thereof is opened to a radially outside portion and the like of the first guide portion 44.

Accordingly, oil discharged from an oil pump 80 is dropped and supplied into the first guide portion 44 via the shaft-portion axial oil passage 81, the shaft-portion radial oil passage 286, and the fixed-carrier radial oil passage 287. Hereby, the oil supplied into the first guide portion 44 is supplied to the needle bearing RB23 of the first guide end portion 52 of the support shaft 251, so as to lubricate a sliding portion such as the needle bearing RB23. Further, the oil discharged from the oil pump 80 partially branches off in the shaft-portion axial oil passage 81 toward a shaft-portion-radial-oil-passage-82 side, and then dropped and supplied into the second guide portion 45 via the shaft-portion annular oil passage 83 and the movable-carrier radial oil passage 84. Hereby, the oil supplied into the first guide portion 44 is supplied to the needle bearing RB24 of the second guide end portion 53 of the support shaft 251, so as to lubricate a sliding portion such as the needle bearing RB24.

As a result, by placing, in end portions of the support shaft 251, the sliding portions such as the needle bearing RB23 and the needle bearing RB24 that support the planetary ball 50 in a rotatable (spinning) manner, the continuously variable transmission 201 is able to surely supply the oil to the needle bearing RB23 and the needle bearing RB24 regardless of a tilting degree of the support shaft 251, in other words, a tilting angle or the like thereof. This allows the continuously variable transmission 201 to surely lubricate the needle bearing RB23 and the needle bearing RB24.

When an outside diameter d2 of the second guide end portion 53 having a relatively large travel amount in a tilting operation is configured to be relatively larger than an outside diameter d1 of the first guide end portion 52, the continuously variable transmission 201 according to the embodiment described above is able to restrain a large frictional force from occurring in the first guide end portion 52 and the second guide end portion 53 at the time when the support shaft 251 is tilted together with the planetary ball 50. As a result, the continuously variable transmission 201 is able to realize a smooth change gear operation.

Further, according to the continuously variable transmission 201 of the embodiment described above, the support shaft 251 is provided so as to be rotatable integrally with the planetary ball 50, the first guide end portion 52 is configured to include the needle bearing RB23 provided between the first guide end portion 52 and the first guide portion 44, and the second guide end portion 53 is configured to include the needle bearing RB24 provided between the second guide end portion 53 and the second guide portion 45. Accordingly, by placing, in the end portions of the support shaft 251, the needle bearing RB23 and the needle bearing RB24 that support the planetary ball 50 in a rotatable (spinning) manner, the continuously variable transmission 201 is able to have a structure in which a lubricating medium is easily suppliable to the sliding portions, thereby making it possible to surely lubricate the needle bearing RB23 and the needle bearing RB24. As a result, the continuously variable transmission 201 is able to prevent burning and a decrease in durability due to poor lubrication.

Note that a structure to fix the planetary ball 50 and the support shaft 251 in the rotation direction is not limited to a form using the bolt 251a and the nut 251b, but may be, for example, forms as illustrated in FIGS. 8, 9, 10.

A support shaft 251 illustrated in FIG. 8 is configured to include a spline engagement portion 251c instead of the bolt 251a and the nut 251b, as a structure to fix a planetary ball 50 and a support shaft 251 in a rotation direction. The spline engagement portion 251c is provided between an outer peripheral surface of an intermediate portion 54 of the support shaft 251 and an inner peripheral surface of a through hole of a planetary ball 50. The spline engagement portion 251c connects the intermediate portion 54 of the support shaft 251 and the planetary ball 50 in an integrally rotatable manner and in a relatively movable in a direction along a second rotation central axis R2. Hereby, the support shaft 251 is provided so as not to rotate relative to the planetary ball 50, in other words, is provided so as to be rotatable integrally with the planetary ball 50, by the spline engagement portion 251c.

A support shaft 251 illustrated in FIG. 9 is configured to include circumference welding portions 251d, 251e instead of the bolt 251a and the nut 251b, as a structure to fix a planetary ball 50 and a support shaft 251 in a rotation direction. The circumference welding portions 251d, 251e fix an intermediate portion 54 of the support shaft 251 and the planetary ball 50 by welding in vicinity to a first guide end portion 52 and a second guide end portion 53 of the support shaft 251. Hereby, the support shaft 251 is fixed to the planetary ball 50 so as not to relatively rotate, in other words, is fixed to the planetary ball 50 so as to be rotatable integrally therewith, by the circumference welding portions 251d, 251e.

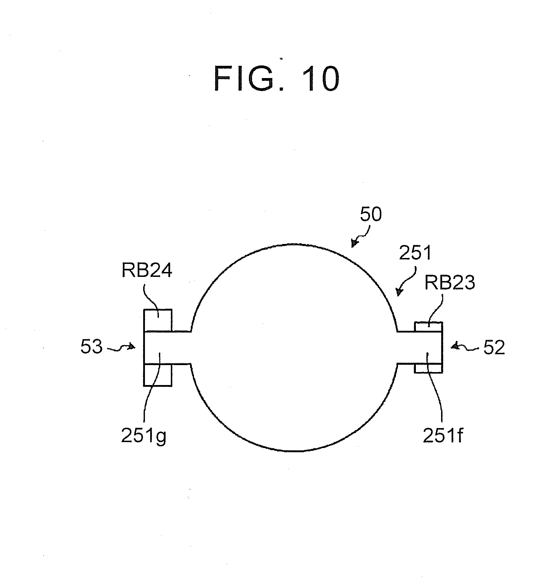

A support shaft 251 illustrated in FIG. 10 is configured such that a planetary ball 50 and the support shaft 51 are molded integrally, instead of the bolt 251a and the nut 251b, as a structure to fix the planetary ball 50 and the support shaft 251 in a rotation direction. That part of the support shaft 251 which corresponds to the intermediate portion 54 is formed integrally with the planetary ball 50, and projections 251f, 251g corresponding to the first guide end portion 52 and the second guide end portion 53 are provided on an outer peripheral surface of the planetary ball 50. Hereby, the support shaft 251 is fixed to the planetary ball 50 so as not to relatively rotate, in other words, is fixed to the planetary ball 50 so as to be rotatable integrally therewith.

Note that the continuously variable transmission according to the above embodiments of the present invention is not limited to the above embodiments, and various modifications are possible as far as they do not exceed what is described in Claims.

### Description of the Reference Numerals

- 1, 201: continuously variable transmission
- 10: first rotational member (first rotating element)
- 20: second rotational member (second rotating element)
- 30: sun roller
- 40: carrier (support rotating element)
- 41: fixed carrier (fixed element)
- 42: movable carrier (movable element)
- 43: plate
- 44: first guide portion
- 45: second guide portion
- 46: slit portion
- 50: planetary ball (rolling member)
- 51, 251: support shaft
- 52: first guide end portion
- 52a: roller
- 53: second guide end portion
- 54: intermediate portion
- 60: transmission shaft
- 80: oil pump
- R1: first rotation central axis
- R2: second rotation central axis
- RB23: needle bearing (first bearing)
- RB24: needle bearing (second bearing)

## Claims

1. A continuously variable transmission **characterized by** comprising:
a transmission shaft serving as a rotation center;
a first rotating element and a second rotating element disposed opposed to each other in an axial direction of the transmission shaft so as to be rotatable relative to each other around a common first rotation central axis as a rotation center;
a rolling member rotatable around, as a rotation center, a second rotation central axis that is different from the first rotation central axis, the rolling member being sandwiched between the first rotating element and the second rotating element so that a torque is transmittable between the first rotating element and the second rotating element;
a support shaft that supports the rolling member such that the second rotation central axis serves as a rotation center and respective end portions thereof project from the rolling member; and
a support rotating element including a fixed element disposed on the transmission shaft so as to be rotatable relative to the first rotating element and the second rotating element around the first rotation central axis as a rotation center and provided on one end-portion side of the support shaft so as not to be rotatable relative to the transmission shaft, and a movable element disposed on the other-end-portion side of the support shaft so as to be opposed to the fixed element and provided so as to be rotatable relative to the transmission shaft, the support rotating element supporting the support shaft, wherein:
the support rotating element holds the support shaft by a first guide portion and a second guide portion in a state where a tilting operation of the rolling member is performable, the first guide portion being provided in the fixed element so as to extend in a direction perpendicular to the first rotation central axis and formed so as to be opened toward the rolling member in such a manner that a first guide end portion, which is one end portion of the support shaft, is inserted therein so that a movement of the first guide end portion is guidable, and the second guide portion being provided in the movable element so as to extend in a direction inclined with respect to the direction perpendicular to the first rotation central axis and formed so as to be opened toward the rolling member in such a manner that a second guide end portion, which is the other end portion of the support shaft, is inserted therein so that a movement of the second guide end portion is guidable, and the support rotating element is able to change a transmission gear ratio, which is a rotation speed ratio between the respective rotating elements, by tilting the rolling member together with the support shaft by a relative displacement between the first guide portion and the second guide portion in association with a relative rotation between the fixed element and the movable element;
the support shaft is configured such that either one of a moving distance of the first guide end portion and a moving distance of the second guide end portion at the time when the support shaft is tilted together with the rolling member is relatively large, and the other one of the moving distances is relatively small; and
an outside diameter of that one of the first guide end portion and the second guide end portion which has a relatively large moving distance is relatively larger than an outside diameter of the other one which has a relatively small moving distance.

2. The continuously variable transmission according to claim 1 wherein:
a ratio between the outside diameter of the first guide end portion and the outside diameter of the second guide end portion is equivalent to a ratio between the moving distance of the first guide end portion and the moving distance of the second above guide end portion at the time when the support shaft is tilted together with the rolling member.

3. The continuously variable transmission according to claim 1 or 2, wherein:
the moving distance of the first guide end portion at the time when the support shaft is tilted together with the rolling member is determined based on a distance from a contact point of the first guide end portion with the first guide portion to a rolling center of the rolling member, and
the moving distance of the second guide end portion at the time when the support shaft is tilted together with the rolling member is determined based on a distance from a contact point of the second guide end portion with the second guide portion to the rolling center of the rolling member.

4. The continuously variable transmission according to any one of claims 1 to 3, wherein:
the ratio between the outside diameter of the first guide end portion and the outside diameter of the second guide end portion is equivalent to a ratio between the distance from the contact point of the first guide end portion with the first guide portion to the rolling center of the rolling member, and the distance from the contact point of the second guide end portion with the second guide portion to the rolling center of the rolling member.

5. The continuously variable transmission according to any one of claims 1 to 4, wherein:
at least either one of the first guide end portion and the second guide end portion is formed separately from an intermediate portion of the support shaft between the first guide end portion and the second guide end portion, so as to be assembled to the intermediate portion.

6. The continuously variable transmission according to any one of claims 1 to 5, wherein:
at least either one of the first guide end portion and the second guide end portion is configured to include a roller to be relatively rotatably assembled to the intermediate portion of the support shaft between the first guide end portion and the second guide end portion.

7. The continuously variable transmission according to any one of claims 1 to 6, wherein:
the support shaft is provided so as to be rotatable integrally with the rolling member;
the first guide end portion is configured to include a first bearing provided between the first guide end portion and the first guide portion; and
the second guide end portion is configured to include a second bearing provided between the second guide end portion and the second guide portion.
